(19) Europäisches Patentamt
European Patent Office
Office européen des brevets

(11) Veröffentlichungsnummer: **0 158 952**
**B1**

# (12) EUROPÄISCHE PATENTSCHRIFT

(45) Veröffentlichungstag der Patentschrift: **20.04.88**

(51) Int. Cl.⁴: **C 07 C 87/40,** C 07 C 85/24, C 08 G 59/50, C 07 C 87/50

(21) Anmeldenummer: **85104248.1**

(22) Anmeldetag: **09.04.85**

## (54) Neue Triamine, ein Verfahren zu ihrer Herstellung und ihre Verwendung als Vernetzer bzw. Härter für Epoxidgruppen oder Isocyanatgruppen aufweisende Kunststoffe bzw. Kunststoffvorläufer.

(30) Priorität: **19.04.84 DE 3414803**

(43) Veröffentlichungstag der Anmeldung:
**23.10.85 Patentblatt 85/43**

(45) Bekanntmachung des Hinweises auf die Patenterteilung:
**20.04.88 Patentblatt 88/16**

(84) Benannte Vertragsstaaten:
**BE CH DE FR GB IT LI**

(56) Entgegenhaltungen:
**EP - A - 0 104 396**
**EP - A - 0 105 146**
**DE - A - 2 515 486**

(73) Patentinhaber: **BAYER AG, Konzernverwaltung RP Patentabteilung, D-5090 Leverkusen 1 Bayerwerk (DE)**

(72) Erfinder: **Knöfel, Hartmut, Dr., Dülmener Weg 21, D-5068 Odenthal-Erberich (DE)**
Erfinder: **Penninger, Stefan, Dr., Hahnenstrasse 106, D-5024 Pulheim (DE)**
Erfinder: **Brockelt, Michael, Neuenhauser Weg 1, D-5060 Bergisch-Gladbach 2 (DE)**
Erfinder: **Hammen, Günter, Dr., Bunzlauer Weg 13, D-4049 Rommerskirchen (DE)**

EP 0 158 952 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Triamine, die sowohl aromatisch als auch cycloaliphatisch gebundene Aminogruppen aufweisen, und die wertvolle Vernetzer mit abgestufter Reaktivität für Epoxidgruppen oder Isocyanatgruppen aufweisende Kunststoffe bzw. Kunststoffvorläufer darstellen, ein Verfahren zu ihrer Herstellung durch katalytische Teilhydrierung der ihnen zugrunde liegenden aromatischen Triamine sowie ihre Verwendung als Härter oder Vernetzer für Epoxidgruppen oder Isocyanatgruppen aufweisende Kunststoffe bzw. Kunststoffvorläufer.

Primäre und sekundäre aliphatische oder aromatische Di- und Polyamine können als Vernetzer oder Kettenverlängerer von Isocyanatgruppen aufweisenden Verbindungen bei der Herstellung von Polyurethankunststoffen verwendet werden [vgl. Becker/Braun, Kunststoffhandbuch 7, Polyurethane, Carl Hanser Verlag, München (1983), S. 100]. Geradkettige, aliphatische Polyamine wie Ethylendiamin, Diethylentriamin oder Dipropylentriamin werden in der Lackindustrie als Härter für Epoxidharze eingesetzt [vgl. z. B. H. Wagner, H.F. Sarx, Lackkunstharze, Carl Hanser Verlag, München (1971), 5. Aufl., Seiten 181–183].

Mit der vorliegenden Erfindung werden nunmehr neue Triamine zur Verfügung gestellt, die sowohl cycloaliphatisch als auch aromatisch gebundene Aminogruppen aufweisen, einen, im Vergleich zu den bislang in der Polyurethan- und Epoxidharzchemie als Vernetzer eingesetzten Polyamine, verminderten Dampfdruck aufweisen und somit in gewerbehygienischer Hinsicht weitgehend unbedenklich sind, und die sich hervorragend als Vernetzer für Epoxidgruppen oder Isocyanatgruppen aufweisende Kunststoffe bzw. Kunststoffvorläufer eignen.

Gegenstand der Erfindung sind gegebenenfalls Stellungs- und/oder Stereoisomerengemische darstellende Triamine der Formel I

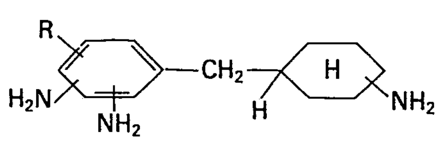

I

in welcher

R für Wasserstoff oder einen verzweigten oder linearen Alkylrest mit 1–4 Kohlenstoffatomen, vorzugsweise jedoch für Wasserstoff oder eine Methylgruppe steht.

Gegenstand der Erfindung ist auch ein Verfahren zur Herstellung dieser Triamine, welches dadurch gekennzeichnet ist, dass man die ihnen zugrunde liegenden aromatischen Triamine in an sich bekannter Weise einer partiellen, katalytischen Kernhydrierung unterwirft.

Gegenstand der Erfindung ist schliesslich auch die Verwendung der neuen Triamine als Härter bzw. Vernetzer für Epoxidgruppen oder Isocyanatgruppen aufweisende Kunststoffe bzw. Kunststoffvorläufer.

Ausgangsmaterialien für das erfindungsgemässe Verfahren sind die den erfindungsgemässen Triaminen entsprechenden aromatischen Triamine der allgemeinen Formel II

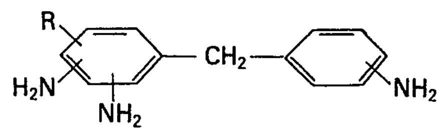

II

in welcher

R die bereits genannte Bedeutung hat, vorzugsweise jedoch für Wasserstoff oder eine Methylgruppe steht.

Die Herstellung dieser aromatischen Triamine erfolgt in an sich bekannter Weise beispielsweise durch Umsetzung von N-[4(2)-Aminobenzyl]-anilin mit gegebenenfalls Alkyl-substituierten Phenylendiaminen gemäss Beilstein 13 H, Seite 309 bzw. gemäss DE-PS-107 718 oder durch Umsetzung (i) eines 3- oder 4-Nitrobenzylhalogenids, von Benzylalkohol oder eines Nitrobenzylchlorid-Isomerengemischs mit (ii) Nitrobenzol, alkylsubstituiertem Nitrobenzol, Alkylbenzol oder Benzol in Gegenwart eines Friedel-Crafts- oder eines Säurekatalysators, Nitrierung der so erhaltenen Umsetzungsprodukte zu den entsprechenden Trinitroverbindungen und Hydrierung der Nitrogruppen in Analogie zu EP-A-46 917. Die nach der letztgenannten Methode erhaltenen Trinitroverbindungen und die daraus hergestellten aromatischen Triamine stellen, herstellungsbedingt, technische Gemische dar, die neben den entsprechenden trifunktionellen Verbindungen noch difunktionelle Verbindungen enthalten können. Aus diesen technischen Gemischen kann jedoch der geringe Anteil an difunktionellen Verbindungen gewünschtenfalls auf der Aminstufe destillativ entfernt werden.

Typische Beispiele geeigneter Ausgangsmaterialien für das erfindungsgemässe Verfahren sind
2,4,4'(2')-Triaminodiphenylmethan,
2,6,4'(2')-Triaminodiphenylmethan,
4,6,4'(2')-Triamino-3-methyl-diphenylmethan,
2,6,4'(2')-Triamino-3-methyl-diphenylmethan,
3,5,4'(2')-Triamino-4-methyl-diphenylmethan,
2,6,4'(2')-Triamino-4-methyl-diphenylmethan,
3,5,4'(2')-Triamino-2-methyl-diphenylmethan,
4,6,4'(2')-Triamino-2-methyl-diphenylmethan,
oder deren Gemische. Auch die entsprechenden Ethyl-, Isopropyl-, n-Propyl- oder m-, iso- oder tert.-Butyl-substituierten Triamino-diphenylmethane können eingesetzt werden.

Bevorzugte Ausgangsmaterialien sind jedoch Isomerengemische von methylsubstituierten Triamino-diphenylmethanen oder deren technischen Gemische mit den entsprechenden Diaminen, wie sie bei der Trinitrierung von 2- und/oder 4-Methyldiphenylmethan bzw. von aus diesen Isomeren bestehenden Kohlenwasserstoffgemischen, Reduktion der Nitrogruppen und gegebenenfalls anschliessender destillativer Aufarbeitung anfallen. Die besonders bevorzugten, nach dieser Verfahrensweise hergestellten Ausgangsmaterialien bestehen im allgemeinen zu über 80 Gew.-% aus

Triaminodiphenylmethanen, die ihrerseits zu über 90 Gew.-% aus Aminobenzyl-diaminotoluol-Isomeren bestehen.

Wie oben ausgeführt, kann es sich bei den Ausgangsmaterialien für das erfindungsgemässe Verfahren ausschliesslich um aromatische Triamine der Formel II bzw. und Gemische derartiger Triamine oder aber um Gemische derartiger Triamine mit den entsprechenden Diaminen handeln, welche vorzugsweise an jedem aromatischen Ring eine Aminogruppe aufweisen. In diesen Gemischen können bis zu 90, vorzugsweise bis zu 50 und insbesondere bis zu 20 Gew.-%, bezogen auf das Gesamtgemisch, an solchen Diaminen vorliegen. Die herstellungsbedingt einen hohen Gehalt an derartigen aromatischen Diaminen aufweisenden Polyamingemischen können gegebenenfalls vor der Durchführung des erfindungsgemässen Verfahrens ganz oder weitgehend destillativ von den Diaminen befreit werden. Es ist jedoch auch möglich, beim erfindungsgemässen Verfahren die Gemische als solche einzusetzen, und anschliessend die Hydrierungsprodukte destillativ von den Hydrierungsprodukten der Diamine und gegebenenfalls ausserdem vorliegenden Nebenprodukten ganz oder teilweise zu befreien.

Die Kernhydrierung der aromatischen Triamine erfolgt nach den bekannten Methoden des Standes der Technik, beispielsweise analog zu der in US-PS-2 511 028 beschriebenen Verfahrensweise. Hierbei werden die, gegebenenfalls im Gemisch mit den entsprechenden Diaminen vorliegenden, aromatischen Triamine unter Anlagerung von 3 Mol Wasserstoff pro Mol Ausgangsverbindung katalytisch hydriert, wobei unter «Ausgangsverbindung» gegebenenfalls das Gemisch der Triamine mit den Diaminen zu verstehen ist. Dies bedeutet, dass die Hydrierungsreaktion vorzugsweise nach Verbrauch von 3 Mol Wasserstoff pro Mol Ausgangsverbindung abgebrochen wird. Die Hydrierung erfolgt bei 20 bis 300 °C, beispielsweise bei 70 bis 200 °C, insbesondere 120 bis 150 °C unter einem Druck von 20 bis 300 bar, vorzugsweise 200 bis 300 bar.

Die Hydrierungsreaktion erfolgt in Gegenwart von 0,1 bis 20 Gew.-%, vorzugsweise von 0,1 bis 10 Gew.-%, bezogen auf katalytisch wirksames Metall einerseits und Triaminoverbindungen andererseits, eines Hydrierungskatalysators.

Geeignete Katalysatoren sind beispielsweise, gegebenenfalls auf inerten Trägern wie Aktivkohle, Kieselgel und insbesondere Aluminiumoxid, vorliegende Elemente der 8. Nebengruppe des Periodensystems der Elemente oder katalytisch wirksame organische Verbindungen dieser Elemente. Besonders gut geeignet sind zum Beispiel Ruthenium-, Platin-, Rhodium-, Nickel- und/oder Kobaltkatalysatoren in elementarer oder chemisch gebundener Form. Besonders bevorzugt werden Ruthenium oder katalytisch wirksame Rutheniumverbindungen eingesetzt. Beispiele geeigneter Rutheniumverbindungen sind Rutheniumdioxid, Rutheniumtetroxid, Bariumperruthenit, Natrium-, Kalium-, Silber-, Calcium- oder Magnesiumruthenat, Natriumperruthenat, Rutheniumpentafluorid, Rutheniumtetrafluoridhydrat oder Rutheniumtrichlorid. Falls Trägersubstanzen für die Katalysatoren mitverwendet werden, beträgt der Metallgehalt des Trägerkatalysators im allgemeinen 1 bis 10 Gew.-%, vorzugsweise 1 bis 5 Gew.-%-. Im übrigen ist selbstverständlich die Art und Menge des eingesetzten Katalysators keineswegs erfindungswesentlich, da die Hydrierungsreaktion nach den an sich bekannten Methoden des Standes der Technik erfolgt.

Es ist oft zweckmässig, die Hydrierungsreaktion in Gegenwart von Ammoniak durchzuführen, da Ammoniak unerwünschte Desaminierungsreaktionen und die Bildung von sekundären Aminen als Nebenprodukte unterdrückt. Falls Ammoniak mitverwendet wird, geschieht dies in Mengen von 0,1 bis 30 Gew.-%, vorzugsweise 5 bis 10 Gew.-%, bezogen auf zu hydrierende Ausgangsmaterialien.

Die Hydrierung kann lösungsmittelfrei oder in Gegenwart inerter Lösungsmittel durchgeführt werden. Im allgemeinen werden niedrigschmelzende bzw. flüssige Diamine in Substanz, hochschmelzende Diamine dagegen in gelöster Form hydriert. Als Lösungsmittel eignen sich unter den Reaktionsbedingungen inerte organische Verbindungen mit niedrigem Siedepunkt, vorzugsweise Alkohole wie Methanol, Ethanol, n-Propanol, i-Propanol, t-Butanol oder Ether, wie z. B. Dioxan, Tetrahydrofuran oder Diethylether oder Kohlenwasserstoffe wie Cyclohexan. Die Durchführung der Hydrierung findet z. B. kontinuierlich in einem Reaktionsrohr, einer Druckkesselkaskade oder vorzugsweise diskontinuierlich in einem Rührautoklaven statt, indem man den Autoklaven mit Katalysator, der zu hydrierenden Substanz und gegebenenfalls mit einem Lösungsmittel beschickt, mehrmals mit Inertgas spült und gegebenenfalls Ammoniak zudosiert. Danach drückt man Wasserstoff auf, bringt das Gemisch auf Reaktionstemperatur und hydriert bis die theoretisch erforderliche Wasserstoffmenge absorbiert ist. Nach Abkühlen des Reaktionsgemisches und Abtrennung des Katalysators kann das Hydrierprodukt destillativ aufgearbeitet werden.

Die Hydrierungsprodukte fallen in hohen Ausbeuten an und lassen sich, erforderlichenfalls, destillativ von nicht umgesetzten aromatischen Aminen oder von den als Nebenprodukten entstehenden perhydrierten Di- und Triaminen, sowie den entsprechenden teilhydrierten Diaminen abtrennen. Auch nach einer derartigen destillativen Reindarstellung der erfindungsgemässen Triamine stellen diese im allgemeinen Gemische von Stereo- und gegebenenfalls Stellungsisomeren dar. Durch die genannte destillative Aufarbeitung sind erfindungsgemässe Triamine zugänglich, die zu über 80, vorzugsweise zu über 95 Gew.-% aus Polyaminen bestehen, die der allgemeinen Formel I entsprechen. Jedoch auch die nicht destillativ aufgearbeiteten erfindungsgemässen Verfahrensprodukte stellen erfindungsgemässe Triamine dar, die jedoch nicht nur Stellungs- und/oder Stereoisomerengemische darstellen können, sondern darüber hinaus im Gemisch mit bis zu 90, vorzugsweise bis zu 50 und insbesondere bis zu

30 Gew.-% an anderen, gegebenenfalls alkylsubstituierten Di- und/oder Triaminen mit Diphenylmethan-, Benzyl-cyclohexan- oder Dicyclohexylmethan-Struktur vorliegen. Die genannten Diamine können dann in den erfindungsgemässen Produkten vorliegen, wenn als Ausgangsmaterialien aromatische Triamine verwendet werden, die, wie oben ausgeführt, aromatische Diamine enthalten und/oder wenn es während der Hydrierungsreaktion im geringen Umfang zu einer Desaminierung des cycloaliphatischen Rings kommt. Eine derartige Desaminierung kann jedoch, wie oben ausgeführt, durch Mitverwendung von Ammoniak bei der Hydrierungsreaktion abgeschwächt werden.

Aufgrund NMR-spektroskopischer Untersuchungen wurde festgestellt, dass bei der Verwendung von alkyl-substituierten aromatischen Triaminen als Ausgangsmaterial bei der Durchführung des erfindungsgemässen Verfahrens die Alkylsubstituenten praktisch ausschliesslich am aromatischen Ring der erfindungsgemässen Verfahrensprodukte vorliegen.

Im allgemeinen ist eine destillative Reindarstellung der erfindungsgemässen Verfahrensprodukte vor ihrer erfindungsgemässen Verwendung nicht erforderlich, ebensowenig kommt es bezüglich der Verwendbarkeit der erfindungsgemässen Verfahrensprodukte für die erfindungsgemässe Verwendung auf deren Stellungs- bzw. Stereoisomerie bzw. auf die entsprechende Isomerenverteilung an.

Die erfindungsgemässen Verfahrensprodukte sind sowohl vor als auch nach ihrer gegebenenfalls erfolgten destillativen Reindarstellung als polyfunktionelle Amine mit Aminogruppen unterschiedlicher Reaktivität interessante Vernetzer oder Härter für Epoxidgruppen oder Isocyanatgruppen aufweisende Kunststoffe bzw. Kunststoffvorläufer. Sie werden bei dieser erfindungsgemässen Verwendung anstelle der bislang üblicherweise hierfür eingesetzten Polyamine verwendet.

In den nachfolgenden Beispielen beziehen sich alle Prozentangaben, soweit nicht anderslautend vermerkt, auf Gewichtsprozente. Die Analytik erfolgte mittels Gaschromatographie.

Beispiel 1

In einem 700-ml Rührautoklaven wurden 350 g eines technischen Amingemischs, bestehend aus 1,4% 4,4'-Diaminodiphenylmethan, 10,2% 4,6,2'-Triamino-3-methyldiphenylmethan, 6,8% 2,6,4'-Triamino-3-methyldiphenylmethan, 78,7% 4,6,4'-Triamino-3-methyldiphenylmethan und 2,9% an anderen aromatischen Polyaminen bestand, und das durch Umsetzung von 2,4-Diaminotoluol mit technisch hergestelltem N-(Aminobenzyl)-anilin mit einem Gehalt an N-(4-Aminobenzyl)-anilin von über 80% in Gegenwart von Salzsäure (Protonierungsgrad: 50%), anschliessender Neutralisation des Katalysators mit Natronlauge und destillativer Aufarbeitung hergestellt worden war, und 35 g Ruthenium-Aluminiumoxid-Trägerkatalysator (5% Ru) vorgelegt und nach mehrmaligem Spülen mit Stickstoff und Wasserstoff 35 g flüssigen Ammoniaks zugepumpt und das Gemisch bei 140 °C und 275 bar hydriert, bis nach einer Reaktionszeit von 14,7 h die theoretisch für die angestrebte Teilhydrierung erforderliche Wasserstoffmenge verbraucht war. Der Autoklav wurde nun auf 70 °C abgekühlt, entspannt und das Produkt in 350 ml Methanol aufgenommen. Der Katalysator wurde abfiltriert, mit Methanol gewaschen und die vereinigten Filtrate destilliert. Bei einer Siedetemperatur von 110–220 °C/0,4–1 mbar gingen 299,5 g Rohprodukt über, das folgende Zusammensetzung besass:

3,4% Diamino-methyldicyclohexylmethane (Isomerengemisch)
4,4% Amino-methylbenzylcyclohexylamin (Isomerengemisch)
4,3% Triamino-methyldicyclohexylmethane (Isomerengemisch)
82,8% Diamino-methylbenzyl-cyclohexylamine (Isomerengemisch)
1,8% Triamino-methyl-diphenylmethan (Isomerengemisch)
3,3% unbekannte Amine.

Beispiel 2

In einem 700 ml Rührautoklaven wurden 367 g Polyamin, das
2,6% Diaminotoluol (Isomerengemisch)
6,2% Diamino-methyl-diphenylmethan (Isomerengemisch)
91,2% Triamino-methyl-diphenylmethan (Isomerengemisch)
bestehend zu über 90% aus Aminobenzyl-diaminotoluol-Isomeren)
enthielt und das gemäss EP-A-46917 und anschliessend destillative Anreicherung der Triamine hergestellt worden war, mit 36,7 g des Katalysators gemäss Beispiel 1 vermischt. Anschliessend wurde mit Stickstoff und Wasserstoff gespült und 37 g flüssiges Ammoniak zugepumpt. Das Ausgangsprodukt wurde auf 140 °C erhitzt und nun unter intensivem Rühren bei 275 bar hydriert bis 4,9 Mol Wasserstoff aufgenommen waren. Dann wurde der Autoklav auf 70 °C gekühlt, und entspannt. Das Rohprodukt wurde in 350 ml Methanol gelöst, der Katalysator abgesaugt und das Lösungsmittel abdestilliert. Nach Flash-Destillation und anschliessender Feindestillation bei 178 °C/0,1 mbar wurden 225 g Triamin gewonnen, das zu 97,9% aus Diaminomethylbenzyl-cyclohexylaminen und zu 2,1% aus nicht identifizierten Polyaminen bestand.

Beispiel 3

In einem 1,3-l Rührautoklaven wurden 380 g eines Gemisches, bestehend aus
0,4% 2,6,4'-Triaminodiphenylmethan
9,8% 2,4,2'-Triaminodiphenylmethan
89,8% 2,4,4'-Triaminodiphenylmethan
380 ml tert.-Butanol und 38 g des Katalysators gemäss Beispiel 1 vorgelegt. Das Polyamingemisch wurde wie das in Beispiel 1 angesetzte Polyamingemisch jedoch unter Verwendung von 1,3-Diaminobenzol anstelle des 2,4-Diaminotoluol hergestellt. Nach mehrmaligem Spülen mit Stickstoff und Wasserstoff wurden 100 bar Wasserstoff aufgedrückt und das Gemisch auf 140 °C erhitzt. Unter intensivem Rühren wurde nun bei einem Druck von 275 bar hydriert, bis nach 8,5 h die theoretisch für die angestrebte Teilhydrierung erforderliche Wasserstoffmenge verbraucht war. Der Autoklav wurde auf 60 °C abgekühlt, entspannt, der Katalysator abgesaugt und das Produkt einer Flashdestillation unterworfen. Dabei wurden 285 g eines bei 155–220 °C/0,6 mbar siedenden Amingemisches gewonnen, das zu 10,1% aus Diamino-dicyclohexylmethan, 29,0% aus Triamino-dicyclohexylmethan, 51,6% aus Diaminobenzyl-cyclohexylamin und 9,3% aus anderen, nicht identifizierten Aminen, bestand. Nach Feindestillation bei 210 °C/0,5 mbar wurden 136 g Diaminobenzyl-cyclohexylamin isoliert, welches noch 6,4%, bezogen auf das Gesamtgemisch, an 2,4,4'-Triamino-dicyclohexylmethan enthielt.

Beispiel 4

In einem 1,3-l Rührautoklaven wurden 253 g 2,4,4'-Triamino-diphenylmethan, hergestellt durch Umkristallisation des gemäss Beispiel 3 eingesetzten Ausgangsgemischs in 1,2-Dichlorbenzol, in 253 g tert.-Butanol unter intensivem Rühren bei 140 °C/275 bar entsprechend Beispiel 1 hydriert. Nach einer Reaktionszeit von 10 h war die theoretische für die angestrebte Teilhydrierung berechnete Menge an Wasserstoff verbraucht, so dass die Hydrierung abgebrochen wurde. Der Autoklav wurde auf 60 °C abgekühlt und entleert. Danach wurde der Katalysator abfiltriert, gewaschen und das Rohprodukt destilliert. Im Siedebereich von 110–184 °C/0,5 mbar destillierten 234 g eines Amingemisches über, das zu 61,9% aus 4-(2,4-Diaminobenzyl)-cyclohexylamin, 30,7% aus 2,4,4'-Triamino-dicyclohexylmethan, 3,5% aus verschiedenen Diaminodicyclohexylmethanen und 3,9% aus unbekannten Aminen bestand. Nach Feindestillation bei 184 °C/0,5 mbar wurden 137 g 4-(2,4-Diaminobenzyl)-cyclohexylamin isoliert, das 4,4% 2,4,4'-Triamino-dicyclohexylmethan, bezogen auf das Gesamtgemisch, enthielt.

## Patentansprüche

1. Gegebenenfalls Stellungs- und/oder Stereoisomerengemische darstellende vorliegende Triamine der Formel I

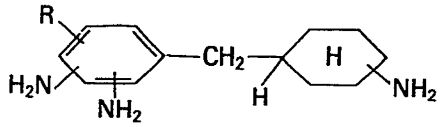

I

in welcher

R für Wasserstoff oder einen verzweigten oder linearen Alkylrest mit 1–4 Kohlenstoffatomen steht.

2. Verfahren zur Herstellung von, gegebenenfalls Stellungs- und/oder Stereoisomerengemische darstellenden Triaminen gemäss Anspruch 1, dadurch gekennzeichnet, dass man die ihnen zugrunde liegenden aromatischen Triamine mit Diphenylmethan-Struktur einer partiellen, katalytischen Kernhydrierung unterwirft.

3. Verwendung der, gegebenenfalls Stellungs- und/oder Stereoisomerengemische darstellenden Triamine gemäss Anspruch 1 als Vernetzungsmittel bzw. Härter für Epoxidgruppen oder Isocyanatgruppen aufweisende Kunststoffe bzw. Kunststoffvorläufer.

## Claims

1. Triamines optionally representing position and/or stereo isomer mixtures and corresponding to the following formula

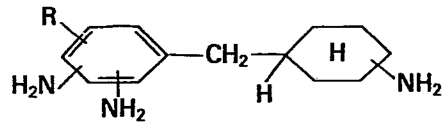

I

in which

R represents hydrogen or a branched or linear $C_1$–$C_4$-alkyl radical.

2. A process for the production of the triamines optionally representing position and/or stereo isomer mixtures claimed in claim 1, characterized in that the aromatic triamines having a diphenylmethane structure on which they are based are subjected to partial catalytic nucleus hydrogenation.

3. The use of the triamines optionally representing position and/or stereo isomers claimed in claim 1 as crosslinking agents or hardeners for plastics containing epoxy groups or isocyanate groups or precursors thereof.

## Revendications

1. Triamines, consistant éventuellement en mélanges d'isomères de position et/ou de stéréoisomères, répondant à la formule I

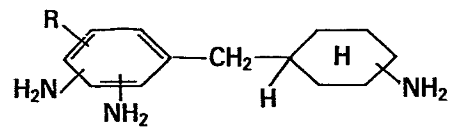

I

dans laquelle

R représente l'hydrogène ou un groupe alkyle à chaîne droite ou ramifiée en $C_1$–$C_4$.

2. Procédé de préparation des triamines, éventuellement à l'état de mélanges d'isomères de position et/ou de stéréoisomères, selon la revendication 1, caractérisé en ce que l'on soumet les triamines aromatiques dont elles dérivent, à structure de diphénylméthane, à une hydrogénation catalytique partielle dans le noyau.

3. Utilisation des triamines, constituées éventuellement de mélanges d'isomères de position et/ou de stéréoisomères, selon la revendication 1, en tant qu'agents réticulants ou durcisseurs pour des résines synthétiques ou matières premières de résines synthétiques portant des groupes époxyde ou des groupes isocyanate.